# FASCICULE DE BREVET EUROPEEN

(11) **EP 0 455 519 B1**
(45) Date de publication et mention de la délivrance du brevet: **22.09.1993**
(21) Numéro de dépôt: 91400546.7
(22) Date de dépôt: 28.02.1991
(51) Int. Cl.: B66F 9/075, B60K 17/14

(54) **Pont hydrostatique de chariot élévateur**
Hydrostatisch angetriebene Achse eines Gabelstaplers
Hydrostatically driven axle for a fork lift truck

(30) Priorité: 04.05.1990 FR 9005671
(43) Date de publication de la demande: 06.11.1991
(73) Titulaire: POCLAIN HYDRAULICS, Société Anonyme, 60411 Verberie Cédex (FR)
(72) Inventeur: Martin, Louis, F-60200 Compiègne (FR)
(74) Mandataire: Hoisnard, Jean-Claude

(56) Documents cités:
- EP-A- 0 203 688
- US-A- 3 005 562
- US-A- 3 439 766

## Description

US-A- 3 005 562 représente un chariot élévateur qui possède un pont hydrostatique comportant un bâti, deux organes de déplacement attelés à des moteurs et un mât de manutention pivotant par rapport audit bâti, ce pont comprenant deux ensembles moteurs, droit et gauche, chaque ensemble comprenant un moteur hydrostatique et un frein et étant attelé à l'un desdits organes de déplacement.

Dans ce chariot connu, les moteurs hydrostatiques sont des moteurs rapides, nécessairement associés à des réducteurs de vitesse, l'ensemble étant abrité dans un carter volumineux, lui-même fixé rigidement au moteur thermique d'entraînement de la pompe hydraulique d'alimentation des moteurs hydrostatiques. Le mât de manutention est monté pivotant directement par rapport au bâti du chariot.

Cette construction est lourde, coûteuse et ne permet pas un montage simple, ni du pont lui-même, ni du mât sur le chariot.

L'invention entend remédier à ces inconvénients en supprimant les réducteurs de vitesse grâce à l'adoption de moteurs hydrostatiques lents, et en prévoyant le montage à pivotement du mât par rapport au pont lui-même.

Ainsi, selon l'invention, les caractéristiques suivantes sont prévues :
a) le moteur hydrostatique de chacun desdits ensembles est un moteur lent, de sorte qu'aucun réducteur de vitesse n'est interposé entre l'organe de déplacement et le moteur lent;
b) les deux moteurs et les deux freins sont contenus dans une poutre résistante unique fixée sur le bâti du chariot ; et,
c) le mât de manutention est monté pivotant sur ladite poutre par l'intermédiaire d'au moins deux paliers de pivotement.

Les avantageuses dispositions suivantes sont en outre de préférence adoptées :
- les freins sont situés entre les deux paliers de pivotement ;
- la poutre est fixée au châssis par deux brides de fixation qui sont, chacune, contenue dans un plan sensiblement perpendiculaire aux arbres de sortie des deux moteurs ;
- dans chaque ensemble-moteur, le moteur comporte un bâti solidaire, vis-à-vis de la rotation, de la poutre unique, et, un arbre de sortie monté à rotation par rapport audit bâti, le frein dudit ensemble-moteur comportant, d'une part un empilage de disques de frein, d'autre part un organe élastique de poussée des disques de frein dudit empilage, cependant que les organes élastiques des freins des deux ensembles-moteurs prennent appui de réaction l'un sur l'autre ;
- une bague de réaction est interposée entre lesdits organes élastiques.

L'avantage principal de l'invention réside dans le faible encombrement, l'économie de poids et la bonne rigidité du pont hydrostatique, ainsi que dans la grande simplicité de son montage.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :
- la figure 1 est une vue en élévation d'un chariot élévateur conforme à l'invention ;
- la figure 2 est une vue suivant flèche G de la figure 1 ;
- la figure 3 est une coupe longitudinale partielle du pont de la figure 2 ; et,

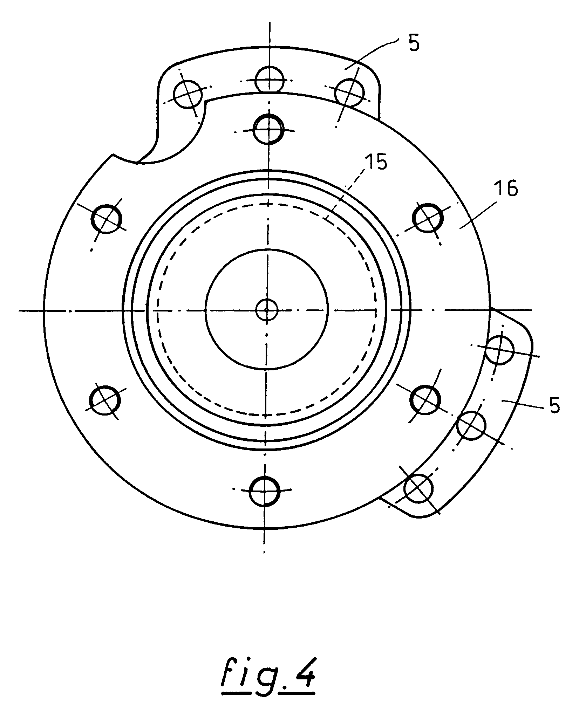

- la figure 4 est une vue suivant flèche F de la figure 3.

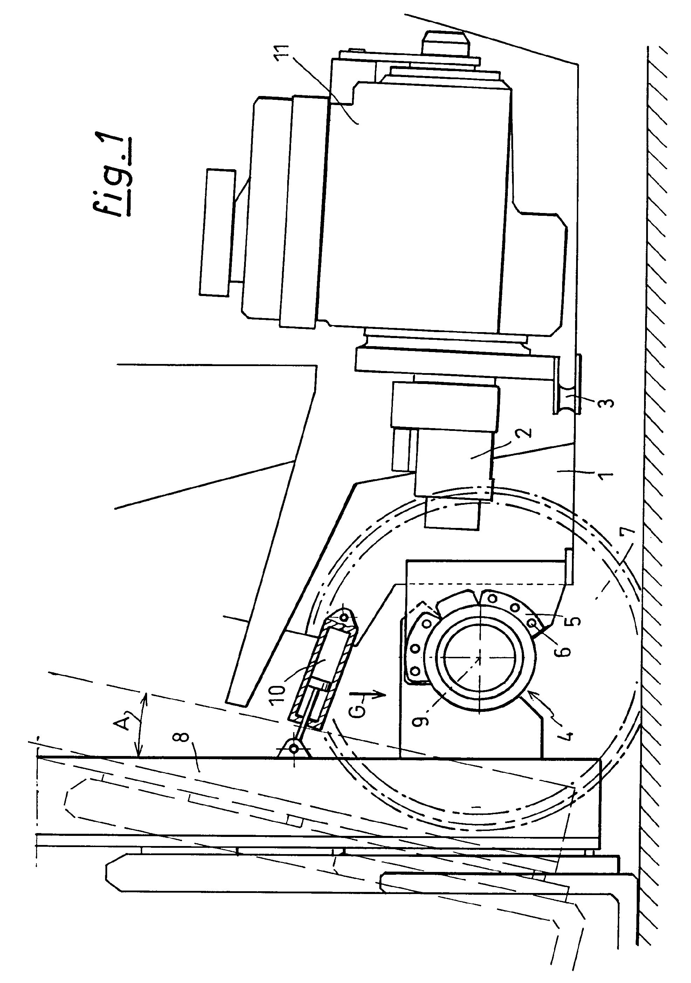

La figure 1 représente la partie avant d'un chariot élévateur comprenant :
- le bâti 1 proprement dit du chariot ;
- un moteur thermique 11, du type "Diesel", auquel est attelée une pompe hydraulique 2, et qui est monté, en l'espèce au moyen de supports élastiques 3, sur la bâti 1 ;
- un pont moteur 4, qui est fixé sur le bâti 1 par des brides 5 et des boulons 6 ;
- des roues avant 7 fixées aux extrémités du pont moteur 4 ;
- un mât de manutention 8 qui est monté pivotant autour de l'axe géométrique 9 du pont moteur 4, un vérin 10 étant attelé entre ce mât de manutention 8 et le bâti 1 et étant apte à régler l'inclinaison dudit mât de manutention 8 par rapport à la direction verticale (débattement angulaire A, au plus égal à 12°).

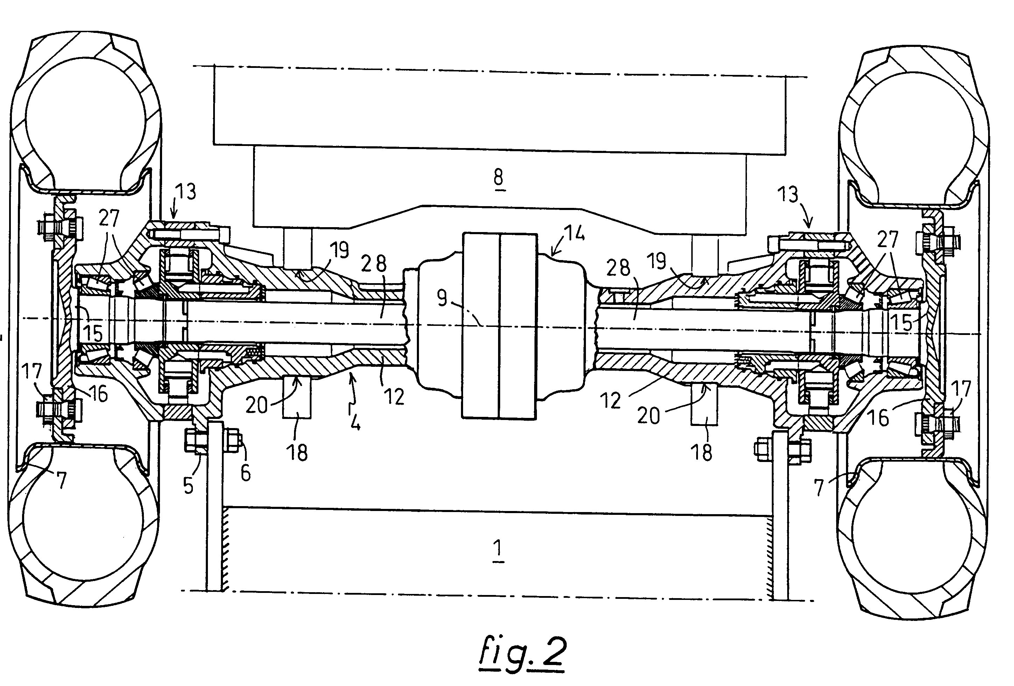

La figure 2 montre la constitution du pont moteur qui comprend :
- une poutre unique 12, dans chacune des extrémités de laquelle est logé un moteur hydrostatique 13 ;
- un renflement médian 14, qui abrite des freins à disques ;
- deux arbres moteurs 15, qui constituent les arbres de sortie des deux moteurs hydrostatiques 13 et qui supportent des flasques d'extrémité 16 sur lesquels sont fixées, par des écrous 17, les roues 7, les brides 5 étant contenues dans des plans perpendiculaires à l'axe 9 des arbres 15. Les arbres 15 sont montés à rotation (palier 27) dans et par rapport à la poutre.

On note, en regard de la figure 2, le montage pivotant du mât de manutention 8 directement sur la poutre 12, au moyen de deux bras 18 solidaires du mât de manutention 8 qui s'étendent perpendiculairement à l'axe 9 des arbres 15 et sont munis d'alésages 19 constituant des paliers lisses pour deux portées 20 ménagées sur la face extérieure de la poutre 12.

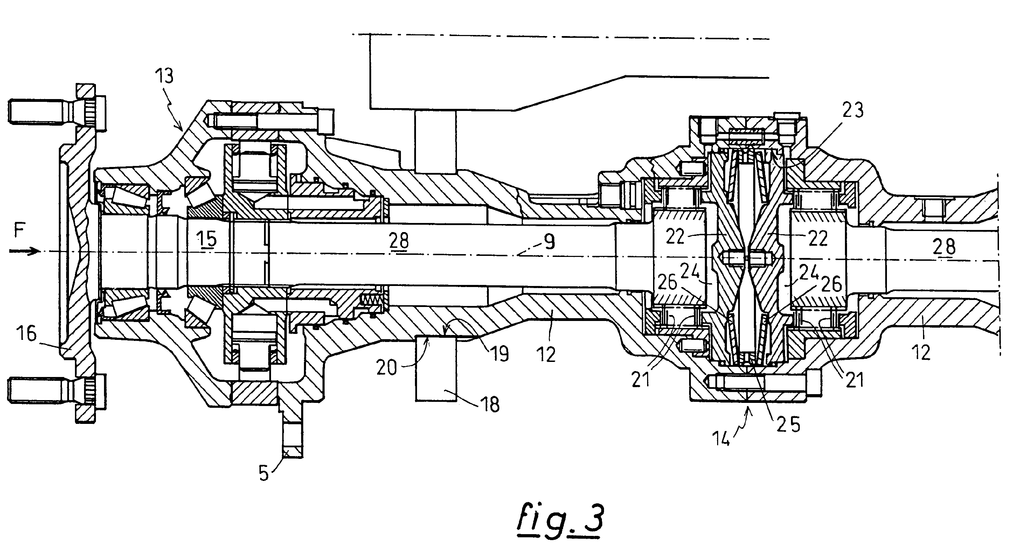

Il convient d'ailleurs de remarquer que si, dans la réalisation représentée, les axes des alésages 19 sont confondus avec l'axe géométrique 9 du pont moteur 4, il s'agit d'une réalisation particulière non limitative de l'invention. Ainsi, d'autres réalisations conformes à l'invention ont déjà été étudiées, dans lesquelles des paires de pattes de montage de tourillons sont solidaires de la poutre 12 et permettent le montage de tourillons excentrés par rapport à l'axe géométrique 9, ces tourillons coopérant avec d'autres pattes solidaires du mât de manutention 8, pour réaliser le montage pivotant du mât de manutention 8 autour des axes de tourillons. Cette variante de réalisation conserve l'avantage principal lié au montage direct du mât de manutention sur la poutre, qui réside notamment dans une déjà grande facilité d'assemblage du mât de manutention 9 et de la poutre 12, tout en facilitant encore le montage à pivotement du mât de manutention 8 par rapport à la poutre 12. Il devient en particulier possible avec cette variante de réalisation de réaliser le montage du mât de manutention 8 d'un seul côté de la poutre 12 par rapport à l'axe géométrique 9, en évitant de devoir entourer cette poutre 12 par les alésages 19 de la réalisation représentée sur les figures 2 et 3.

La coupe de la figure 3 montre les détails, classiques, des moteurs hydrostatiques 13, ainsi que l'arbre de sortie 15 du moteur hydrostatique 13 situé à gauche sur la figure. Un autre arbre 28, solidaire en rotation de l'arbre 15 et sortant du côté opposé à celui du flasque 16 de fixation des roues, est muni d'un jeu de disques de frein qui est contenu à l'intérieur du renflement 14 et qui, avec un deuxième jeu de disques de frein solidaires de la poutre 12, constitue un empilage 21 de disques de frein. Dans la réalisation représentée, un couvercle 22, interne à la poutre 12, monté coulissant à l'intérieur d'un alésage 23 de cette poutre, délimite avec ladite poutre 12 une chambre 24 à l'intérieur de laquelle est contenu l'empilage 21. Ce couvercle 22 constitue une pièce de poussée des disques de frein de l'empilage 21. Les couvercles 22, disposés en regard des extrémités internes des deux arbres 15, sont en outre disposés en regard l'un de l'autre. Une bague de réaction 25, montée librement flottante entre ces deux couvercles 22, constitue un appui pour deux rondelles élastiques 26, formant ressorts, interposées, chacune, entre ladite bague de réaction 25 et un couvercle 22. L'effet élastique des rondelles 26 est, précisément, de pousser les couvercles 22 vers les empilages 21 respectifs dans le sens conduisant à réaliser le freinage de la rotation de l'arbre 28 correspondant par rapport à la poutre 12. Chaque frein constitue un frein de sécurité, dont la chambre de défreinage est constituée par la chambre 24.

A noter, en regard de la figure 2, que le renflement 14 qui abrite les disques de frein 21 et leur commande (chambre 24, rondelle élastique 26), est situé en position centrale de la poutre 12, entre les deux paliers (19-20) du montage pivotant du mât de manutention 8 sur la poutre 12.

L'invention qui vient d'être décrite permet donc, par adoption de moteurs hydrostatiques lents 13, aptes à entraîner directement les roues 7 sans interposition de réducteurs de vitesse, et de freins associés, de loger l'ensemble dans une seule poutre 12, qui est fixée (5-6) sur le bâti 1 du chariot de manière indépendante du moteur thermique 11 et de la pompe hydraulique 2.

Cette disposition est moins encombrante et moins lourde que celles connues antérieurement, et est également plus aisée à installer que celle dans laquelle le carter de pont moteur est solidaire du moteur thermique.

Par ailleurs, le montage à pivotement du mât de manutention 8 directement sur la poutre 12 rend l'assemblage plus facile. La rigidité de la poutre 12 permet un tel montage.

Enfin, les freins de sécurité (14-21) sont attelés aux roues 7 sans aucune démultiplication, directement au moyen des arbres 15 et 28 des moteurs hydrostatiques 13, ce qui est gage d'efficacité et de fiabilité.

## Revendications

1. Pont hydrostatique d'un chariot élévateur comportant un bâti (1), deux organes de déplacement (7) attelés à des moteurs (13) et un mât de manutention (8) monté pivotant par rapport audit bâti, ce pont comprenant deux ensembles moteurs, droit et gauche, chaque ensemble comprenant un moteur hydrostatique (13) et un frein (14-21) et étant attelé à l'un desdits organes de déplacement (7),
caractérisé en ce que
a) le moteur hydrostatique (13) de chacun desdits ensembles est un moteur lent, de sorte qu'aucun réducteur de vitesse n'est interposé entre l'organe de déplacement (7) et ce moteur lent;
b) les deux moteurs (13) et les deux freins (14-21) sont contenus dans une poutre résistante unique (12) fixée (5-6) sur le bâti (1) du chariot; et,
c) le mât de manutention (8) est monté pivotant sur ladite poutre (12) par l'intermédiaire d'au moins deux paliers de pivotement (19-20).

2. Pont hydrostatique selon la revendication 1, caractérisé en ce que les freins (14-21) sont situés entre les deux paliers de pivotement (19-20).

3. Pont hydrostatique selon l'une quelconque des revendications 1 et 2, caractérisé en ce que la poutre est fixée au châssis par deux brides de fixation (5) qui sont, chacune, contenue dans un plan sensiblement perpendiculaire aux arbres de sortie (15-28) des deux moteurs.

4. Pont hydrostatique selon l'une quelconque des revendications 1-3, caractérisé en ce que, dans chaque ensemble-moteur, le moteur comporte un bâti (13) solidaire, vis-à-vis de la rotation, de la poutre unique (12), et, un arbre de sortie (15-28) monté à rotation par rapport audit bâti (13), le frein dudit ensemble moteur comportant, d'une part un empilage de disques de frein (21), d'autre part un organe élastique (26) de poussée des disques de frein dudit empilage, cependant que les organes élastiques (26) des freins des deux ensembles moteurs prennent appui de réaction l'un sur l'autre.

5. Pont hydrostatique selon la revendication 4, caractérisé en ce qu'une bague de réaction (25) est interposée entre lesdits organes élastiques (26).

## Claims

1. Hydrostatic axle for a lift truck comprising a frame (1), two displacement members (7) coupled to motors (13) and a handling mast (8) mounted to pivot with respect to said frame, this axle comprising two motor-assemblies, right- and left-hand, each assembly comprising a hydrostatic motor (13) and a brake (14-21) being coupled to one of said displacement members (7). characterized in that
a) the hydrostatic motor (13) of each of said assemblies is a slow motor such that no speed reducer is interposed between the displacement member (7) and this slow motor;
b) the two motors (13) and the two brakes (14-21) are contained in a single resistant beam (12) fixed (5-6) on the frame (1) of the truck; and
c) the handling mast (8) is pivotally mounted on said beam (12) via at least two pivot bearings (19-20).

2. Hydrostatic axle according to claim 1, characterized in that the brakes (14-21) are located between the two pivot bearings (19-20).

3. Hydrostatic axle according to any one of claims 1 and 2, characterized in that the beam is fixed to the chassis by two fixing flanges (5) which are each contained in a plane substantially perpendicular to the driven shafts (15-28) of the two motors.

4. Hydrostatic axle according to any one of claims 1 to 3, characterized in that, in each motor-assembly, the motor comprises a frame (13) fast, with respect to rotation, with the single beam (12) and a driven shaft (15-28) mounted to rotate with respect to said frame (13), the brake of said motor-assembly comprising, on the one hand, a stack of brake discs (21), on the other hand, an elastic member (26) for thrust of the brake discs of said stack, whilst the elastic members (26) of the brakes of the two motor-assemblies abut on one another by reaction.

5. Hydrostatic axle according to claim 4, characterized in that a reaction ring (25) is interposed between said elastic members (26).

## Patentansprüche

1. Hydrostatisch angetriebene Achse eines Gabelstaplers, bestehend aus einem Fahrgestell (1), zwei Verfahrorganen (7), die mit Motoren (13) gekoppelt sind, und einen Hubmast (8), der kippbar zu dem genannten Fahrgestell angebracht ist, wobei diese Achse zwei Antriebseinheiten, eine linke und eine rechte, aufweist, wobei jede Einheit aus einem Hydrostatikmotor (13) und einer Bremse (14, 21) besteht und mit einem der genannten Verfahrorgane (7) gekoppelt ist, dadurch gekennzeichnet, daß
a) der Hydrostatikmotor (13) jeder der genannten Einheiten ein langsam laufender Motor ist, dergestalt daß kein Getriebe zwischen dem Verfahrorgan (7) und diesem langsam laufenden Motor zwischengeschaltet ist;
b) die beiden Motoren (13) und die beiden Bremsen (14, 21) in einem festen einzelnen Träger (12) untergebracht sind, der an dem Fahrgestell (1) des Gabelstaplers befestigt ist (6, 6); und
c) der Hubmast (8) über wenigstens zwei Schwenklager (19, 20) kippbar an dem genannten Träger (12) angebaut ist.

2. Hydrostatisch angetriebene Achse nach Anspruch 1, dadurch gekennzeichnet, daß sich die Bremsen (14, 21) zwischen den beiden Schwenklagern (19, 20) befinden.

3. Hydrostatisch angetriebene Achse nach einem der Ansprüche 1 und 2,
dadurch gekennzeichnet, daß der Träger am Fahrgestell mit zwei Befestigungsflanschs (5) angebracht ist, die sich beide in einer zu den Abtriebswellen (15, 28) der beiden Motoren etwa senkrecht liegenden Ebene befinden.

4. Hydrostatisch angetriebene Achse nach einem der Ansprüche 1 bis 3,
dadurch gekennzeichnet, daß bei jeder Antriebseinheit der Motor ein mit dem einzelnen Träger (12) drehfest verbundenes Gehäuse (13) sowie eine zu dem genannten Gehäuse (13) drehbar gelagerte Abtriebswelle (15, 28) aufweist, wobei die Bremse der genannten Antriebseinheit einerseits aus einem Bremsscheibenpaket (21) und andererseits aus einem federnden Schubteil (26) für die Bremsscheiben des Pakets besteht, während die federnden Teile (26) der Bremsen der beiden Antriebseinheiten in Druckanlage aneinander kommen.

5. Hydrostatisch angetriebene Achse nach Anspruch 4, dadurch gekennzeichnet, daß ein Gegendruckring (25) zwischen den genannten federnden Teilen (26) angeordnet ist.
